(19)

Europäisches
Patentamt
European
Patent Office
Office européen
des brevets

(11) EP 4 354 356 A1

(12) EUROPEAN PATENT APPLICATION

(43) Date of publication:
17.04.2024 Bulletin 2024/16

(51) International Patent Classification (IPC):
G06N 5/046 (2023.01)    G06N 20/00 (2019.01)

(21) Application number: 22201208.0

(22) Date of filing: 12.10.2022

(52) Cooperative Patent Classification (CPC):
G06N 5/046; G06N 20/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Nokia Technologies Oy
02610 Espoo (FI)

(72) Inventors:
• MONTANARI, Alessandro
  Cambridgeshire, CB1 8DZ (GB)
• KAWSAR, Fahim
  Cambridge, CB22 5FT (GB)
• BAKAR, Abu
  Chicago, 60645 (US)

(74) Representative: Varley, James Richard
Venner Shipley LLP
200 Aldersgate
London EC1A 4HD (GB)

(54) **A SYSTEM FOR THE DEPLOYMENT OF FAST AND MEMORY EFFICIENT TSETLIN MACHINES MODELS ON RESOURCE CONSTRAINED DEVICES**

(57) This specification describes systems, apparatus and methods for deploying Tsetlin machine models on resource-constrained devices. According to a first aspect of this specification, there is described apparatus comprising: one or more sensors; at least one processor; and at least one memory with storing instructions that, when executed by the at least one processor, cause the apparatus at to at least: collect one or more sets of sensor data using the one or more sensors; classify the one or more sets of sensor data using an encoded Tsetlin machine. The encoded Tsetlin machine comprises a compressed representation of a trained Tsetlin machine. The compressed representation is based on a number of exclude decisions of the trained Tsetlin machine being greater than a number of include decisions of the trained Tsetlin machine.

FIG. 4

EP 4 354 356 A1

## Description

### Field

This specification describes systems, apparatus and methods for deploying Tsetlin machine models on resource-constrained devices.

### Background

Currently, deep neural networks (DNNs) are the favoured approach to embed intelligence into sensors. DNNs offer good accuracy for complex tasks but present several challenges when deployed on resource constrained devices, such as batteryless sensors. DNN models are in fact resource hungry, both in terms of memory required to store trained models and runtime memory, but also in terms of computational capacity to achieve a reasonable latency.

### Summary

According to a first aspect of this specification, there is described apparatus comprising: one or more sensors; at least one processor; and at least one memory with storing instructions that, when executed by the at least one processor, cause the apparatus at to at least: collect one or more sets of sensor data using the one or more sensors; classify the one or more sets of sensor data using an encoded Tsetlin machine. The encoded Tsetlin machine comprises a compressed representation of a trained Tsetlin machine. The compressed representation is based on a number of exclude decisions of the trained Tsetlin machine being greater than a number of include decisions of the trained Tsetlin machine.

The compressed representation may comprise a sequence of N-bit blocks, each block encoding a repeating sequence of include and/or exclude decisions of the trained Tsetlin machine and comprising: a two-bit key, the two-bit key representing an include and/or exclude pattern of the trained Tsetlin machine; and an N-2 bit number, the number encoding a length of a repeating sequence of the two-bit key. The N-2 bit number may encode a number of repetitions of the 2-bit key before either: (i) the repeating 2-bit pattern changes or (ii) the maximum number of repetitions that is representable by the block is reached. The N-bit block may be an 8-bit, 16-bit or 32-bit block.

The compressed representation may comprise one or more blocks corresponding to the include decisions of a respective class of the trained Tsetlin machine. A block may comprise: a block-length index, the block-length index indicating a length of the block; and one or more sub-blocks. A sub-blocks corresponds to a clause in the respective class represented by the block. A sub-block may comprise: a clause length index indicating length of the sub-block; and if the clause length index is non-zero, one or more pairs of inclusion indices, each pair of inclusion indices comprising a feature index and a literal index identifying an include decision of the trained Tsetlin machine for the clause represented by the sub-block. Each clause in a class of the trained Tsetlin machine may be represented by a sub-block in a respective block of the encoded representation, i,e, every clause in the Tsetlin machine is represented by a respective sub-block. Alternatively, clauses without include decisions that occur at the end of a class maybe skipped.

The apparatus may further comprise a power system for generating power from ambient energy, wherein the instructions further cause the apparatus to: estimate an amount of energy available for classification of the one or more sets of sensor data; and determine a subset of clauses for use by the encoded Tsetlin machine for classifying the sensor data based on the estimated amount of energy and an ordered list of clauses, the ordered list of clauses indicating a relative importance of each clause in the Tsetlin machine.

According to a further aspect of this specification, there is described apparatus comprising: one or more sensors; a power system for generating power from ambient energy; at least one processor; and at least one memory with storing instructions that, when executed by the at least one processor, cause the apparatus at least to: collect one or more sets of sensor data using the one or more sensors; estimate an amount of energy available for classification of the one or more sets of sensor data; determine a subset of clauses for use by a Tsetlin machine for classifying the sensor data based on the estimated amount of energy and an ordered list of clauses, the ordered list of clauses indicating a relative importance of each clause in the Tsetlin machine; and classify the one or more sets of sensor data using the Tsetlin machine.

To estimate the amount of energy available for classification of the one or more sets of sensor data, the instructions may further cause the apparatus to: determine an off-time of the apparatus; and compare the off-time to an off-threshold; and wherein the determining of the subset of clauses for use by the Tsetlin machine for classifying the sensor data further comprises: if the off-time is greater than the off-threshold, dropping one or more clauses from the Tsetlin machine based on a position of the one or more clauses on the ordered list; and if the off-time is less than the off-threshold, adding one or more previously-dropped clauses to the Tsetlin machine based on a position of the one or more clauses on the ordered list.

According to a further aspect of this specification, there is described a computer implemented method comprising: training a Tsetlin machine on a set of training data, the set of training data comprising a plurality of sets of sensor data, each with a corresponding classification; classifying, using the trained Tsetlin machine, the training data to determine a set of test classifications; separating positive and negative clauses of the trained Tsetlin machine; generating a set of ranked positive clauses and a set of ranked negative clauses by ranking the positive clauses and negative clauses of the trained Tsetlin machine based on the set of test classifications; combining the set of ranked positive clauses and the set of ranked negative clauses to generate a combined ranked list of clauses, wherein the combined ranked list of clauses alternates between positive and negative clauses; and encoding the combined ranked list of clauses using an encoding scheme based on a number of exclude decisions of the trained Tsetlin machine being greater than a number of include decisions of the trained Tsetlin machine.

Ranking the positive clauses and negative clauses of the trained Tsetlin machine based on the set of test classifications further comprises, for each of a plurality of training examples in the training dataset, each training example comprising a set of sensor data and a ground truth classification: comparing the test classification of the training example to the ground truth classification of the training example. If the test classification of the training example matches the ground truth classification of the training example, the method comprises: increasing weights associated with positive clauses with a positive output in the class associated with the test classification; and decreasing weights associated with negative clauses with a positive output in the class associated with the test classification. If the test classification of the training example does not match the ground truth classification of the training example, the method comprises: decreasing weights associated with positive clauses with a positive output in the class associated with the test classification; and increasing weights associated with negative clauses with a positive output in the class associated with the test classification. The method further comprises ranking the positive clauses based on their respective weights; and ranking the negative clauses based on their respective weights.

The encoding scheme may comprise a first encoding scheme or a second encoding scheme. The first encoding scheme may comprise: encoding include and exclude states of the Tsetlin machine into a plurality of blocks, each block comprising: a two-bit key, the two-bit key representing an include and/or exclude pattern of the trained Tsetlin machine; and an N-2 bit number, the number encoding a length of a repeating sequence of the two-bit key. The second encoding scheme may comprise: encoding include and exclude states of the Tsetlin machine into a plurality of blocks, each block comprising: a block-length index, the block-length index indicating a length of the block; and one or more sub-blocks, wherein a sub-blocks corresponds to a clause in the respective class represented by the block, a sub-block comprising: a clause length index indicating length of the sub-block; and if the clause length index is non-zero, one or more pairs of inclusion indices, each pair of inclusion indices comprising a feature index and a literal index identifying an include decision of the trained Tsetlin machine for the clause represented by the sub-block.

According to a further aspect of this specification, there is described a computer implemented method comprising: causing collection of one or more sets of sensor data using one or more sensors; classifying the one or more sets of sensor data using an encoded Tsetlin machine, wherein the encoded Tsetlin machine comprises a compressed representation of a trained Tsetlin machine, the compressed representation based on a number of exclude decisions of the trained Tsetlin machine being greater than a number of include decisions of the trained Tsetlin machine.

According to a further aspect of this specification, there is described a computer implemented method comprising: causing collection of one or more sets of sensor data using the one or more sensors; estimating an amount of energy available for classification of the one or more sets of sensor data; determining a subset of clauses for use by a Tsetlin machine for classifying the sensor data based on the estimated amount of energy and a set of weight, each weight associated with a respective clause in a set of clauses; and classifying the one or more sets of sensor data using the Tsetlin machine.

According to a further aspect of this specification, there is described a computer program product comprising computer readable instructions that, when executed by a computer, cause the computer to perform operations comprising: causing collection of one or more sets of sensor data using one or more sensors; classifying the one or more sets of sensor data using an encoded Tsetlin machine, wherein the encoded Tsetlin machine comprises a compressed representation of a trained Tsetlin machine, the compressed representation based on a number of exclude decisions of the trained Tsetlin machine being greater than a number of include decisions of the trained Tsetlin machine.

According to a further aspect of this specification, there is described a computer program product comprising computer readable instructions that, when executed by a computer, cause the computer to perform operations comprising: causing collection of one or more sets of sensor data using the one or more sensors; estimating an amount of energy available for classification of the one or more sets of sensor data; determining a subset of clauses for use by a Tsetlin machine for classifying the sensor data based on the estimated amount of energy and a set of weight, each weight associated with a respective clause in a set of clauses; and classifying the one or more sets of sensor data using the Tsetlin machine.

**Brief Description of the Drawings**

Some example embodiments will now be described with reference to the accompanying drawings, in which:

FIG. 1 shows a schematic overview of Tsetlin automata (TA) and a clause unit;
FIG. 2 shows a schematic overview of a Tsetlin machine (TM);
FIG. 3 shows a schematic overview of a sensor apparatus/system;
FIG. 4 shows a schematic overview of a method for the automated transition of Tsetlin Machines from training to optimised inference on microcontrollers;
FIG. 5A shows a schematic example of a method for encoding a Tsetlin machine;
FIG. 5B shows an example of a TM encoding produced by this encoding scheme;
FIG. 6A shows a further schematic example of a method for encoding a Tsetlin machine;
FIG. 6B shows an example of a TM encoding produced by this encoding scheme;
FIG. 7 shows a schematic example of a power-aware adaptive method of using a Tsetlin machine;
FIG. 8 shows a flow diagram of an example method for classifying sensor data;
FIG. 9 shows a flow diagram of a further example method for classifying sensor data;
FIG. 10 shows a flow diagram of an example method for encoding a TM for use by a constrained sensor device;
FIG. 11 shows a schematic example of divisions of tasks between components of a computing system;
Figure 12 shows a schematic example of a system/apparatus 1200 for performing any of the methods described herein; and
FIG. 13 shows a non-transitory media 1300 according to some embodiments.

**Detailed Description**

The advent of myriad of sensing devices in everyday life has sparked a growing need for making them battery-free. Harvested ambient energy from solar, kinetic, radio frequency or other sources has the potential to enable autonomous operation of batteryless devices and/or sensors making edge applications maintenance-free and long-lived for a sustainable future. However, these devices are impractical without the pairing of an ML (Machine Learning) model that can compute meaningful results directly on the sensor, without the need for high-energy data transmission to the cloud.

The vision of ubiquitous computing will require batteryless sensors to harvest ambient energy to ensure a long lifetime and low maintenance cost. The sporadic availability of harvested energy makes the continuous execution of the programs impossible [29]. Devices often accumulate energy in a capacitor and run programs only when the level of charge is sufficient to keep the device operating. When the energy is depleted, the device switches off until the next charging cycle is complete, resulting in very short uptime periods (e.g., few milliseconds) and potentially long downtimes (e.g., hours). This hampers the use of conventional programming models, designed for continuously powered devices, to run correctly on batteryless devices and/or sensors as the memory consistency and forward progress are compromised due to frequent power failures.

This specification describes encoding and optimisation techniques for a logic-based learning algorithm called the Tsetlin Machine (TM), which is an emerging machine learning algorithm utilising the principles of learning automata and game theory. The TM's inference routine uses propositional logic as opposed to arithmetic operations, which makes it a less computationally intensive and energy frugal alternative to traditional artificial neural networks. The architectural simplicity makes TM a promising candidate for intermittently powered systems.

Nevertheless, TMs still suffer from substantial memory footprint and latency when deployed on constrained devices and/or sensors. When TMs are naively deployed on intermittently powered devices, they may suffer from a large memory footprint and result in slow inferences. Moreover, similarly to deep neural networks, vanilla TMs can produce a valid inference only when there is sufficient energy to execute the entire model (i.e., all clauses for all classes) and cannot easily adapt to fluctuating energy.

The systems, methods and apparatus described herein provide encoding schemes for TMs and/or power-aware adaptive execution of TMs, enabling the deployment of TM models that are significantly faster, hence consuming also significantly less energy, and that have a more limited memory footprint. This specification explores the practical possibilities of Tsetlin Machines, for example, in adaptive batteryless systems and their advantages compared to binarized neural networks in terms of energy efficiency. This occurs due to the intrinsic logic-driven inference procedure leading to low latency combined with a simple hierarchical structure giving prime suitability for intermittent execution models. These characteristics allow a framework for automating the deployment of Tsetlin Machines on resource-constrained microcontrollers through encoding techniques that offers the user the trade-off between memory footprint and energy efficiency, as well as runtime adaptability.

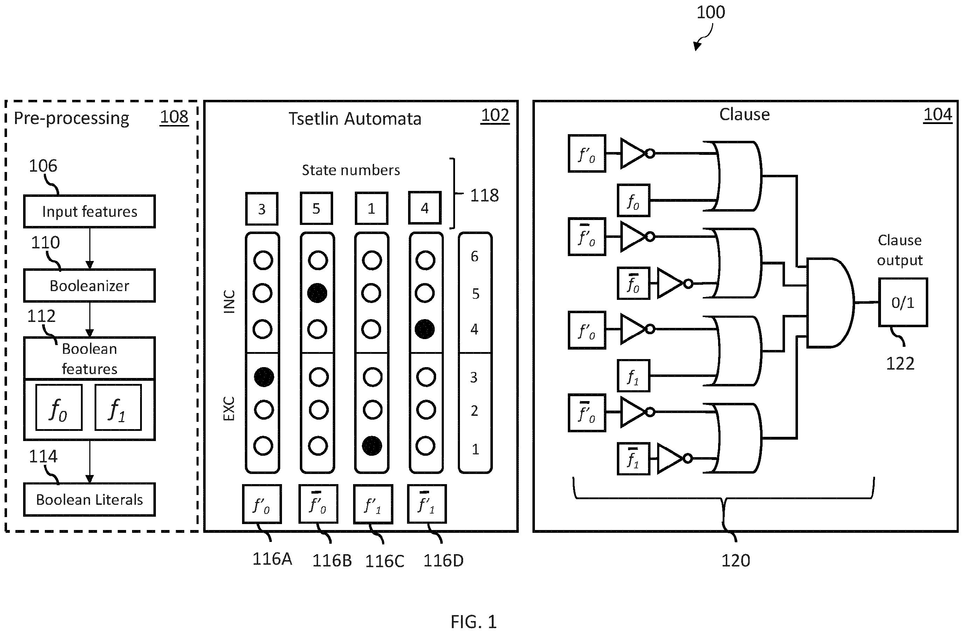

FIG. 1 shows a schematic overview of Tsetlin automata 102 (TA) and a clause unit 104. Tsetlin automata and their associated clauses are the building blocks of Tsetlin machines. Tsetlin Automata 102 form logic propositions with Booleanized input features and their complements. These logic propositions are used by the Tsetlin machine to determine a classification for the input features 106.

Prior to input in the TM, a set of input features 106 undergoes a pre-processing operation 108. In the pre-processing operation 108, the set of input features is converted to set of Boolean features 112, e.g. using a booleanizer 110. The set of Boolean features 112 comprises one or more, e.g. a plurality, of Boolean values. In the example shown the set of Boolean features has two Boolean values, $f_0$ and $f_1$. This Booleanization differs from binarization as there is no longer any notion of place value, i.e. if a floating point number is binarized to 4 bits it will have a most significant bit and least significant bit, e.g. (1100), whereas after booleanization the floating point number will be considered as individual bits (1,1,0,0).

Any booleanization method 110 known in the art may be used to process the input to TM models. For example, the booleanization 110 may be performed by pre-defined functions such as Adaptive Thresholding, quantile binning based on the distributions of each feature or creating equally spaced fixed thresholds between the maximum and minimum input values..

The pre-processing operation 108 continues by converting the set of Boolean values to a set of Boolean literals 114 (also referred to herein as "literals"). The set of Boolean literals 114, L, comprises a union of the set of Boolean features 112 with their logical negations (denoted herein $\overline{f_i}$). For example, if the set of Boolean features 112 is given by $\{f_0,f_1\}=\{1,0\}$, then the set of Boolean literals 114 is given by $L=\{f_0,\overline{f_0}, f_1, \overline{f_1} \}=\{1,0,0,1\}$.

The TA 102 use the literals 114 to determine, for each literal in the set of literals 114, an inclusion value 116A-D (also referred to herein as an "inclusion state") for the literal. The inclusion value 116A-D indicates whether or not the literal should be included when evaluating the clause 104, or whether it should be excluded. For example, an inclusion value of 1 may indicate that the literal should be included in the clause evaluation, while an inclusion value of o may indicate that the literal should be excluded from the clause evaluation. The inclusion/exclusion value for literal $f_i$ is denoted herein with a prime, i.e. $f_i'$.

The TA 102 each have a finite number of states 118 that are used to determine the inclusion values 116A-D for the literals 114. Half of the states correspond to an inclusion value of "Include" (e.g. 1), with the other half corresponding to an inclusion value of "Exclude" (e.g. 0). The TAs 102 can either be viewed by their state numbers (e.g. 1 to 6 as seen in Figure 1A) or by their binary include and exclude decisions. A Tsetlin automaton (TA) is instantiated for every Boolean feature and its complement, i.e. for every Boolean literal 114. The Boolean literals 114 and their respective TA include/exclude decisions 116A-D are used to create the propositional logic seen through the clause 104.

In the example shown, each TA 102 has six states, with states 1-3 corresponding to a exclude state and states 4-6 corresponding to an include state. The first TA, corresponding to the $f_0$ literal, is in state 3, indicating that the inclusion state for $f_0$ is exclude, e.g. $f_0' = 0$ . The second TA, corresponding to the $\overline{f_0}$ literal, is in state 5, indicating that the inclusion state for $\overline{f_0}$ is include, e.g. $\overline{f_0}' = 1$ . The third TA, corresponding to the $f_1$ literal, is in state 1, indicating that the inclusion state for $f_1$ is exclude, e.g. $f_1' = 0$ . The second TA, corresponding to the $\overline{f_0}$ literal, is in state 5, indicating that the inclusion state for $\overline{f_0}$ is include, e.g. $\overline{f_1}' = 1$ .

The clause 104 represents a main element in the computational path that leads from the input data to the output classification. Clauses 104 implement a fixed logic proposition 120 to generate a clause output 122. For example, the clause 104 may implement a logical AND operation between the literals with an inclusion state of "include" to generate the clause output 122. The clause output may be a Boolean variable, e.g. a one or zero, indicating a positive or negative decision respectively. The example shown in FIG. 1 is one way a clause can be implemented with logic gates; other examples are possible.

The overall number of clauses 104 in the Tsetlin machine (and thus the number of TA) is a parameter that a user can configure. Typically, higher numbers of clauses 104 result in a higher classification accuracy, as there is a greater likelihood of the TM finding the right propositions for classification. Through the training process, the TM will attempt to find the best configuration of include/exclude decisions for the TAs 102 such that a correct classification can be made after the clause computation. The simplicity of the main TM building blocks and the fixed structure of the clauses contribute to making TMs suitable for resource constrained devices and amenable to be implemented on specialised silicon chips.

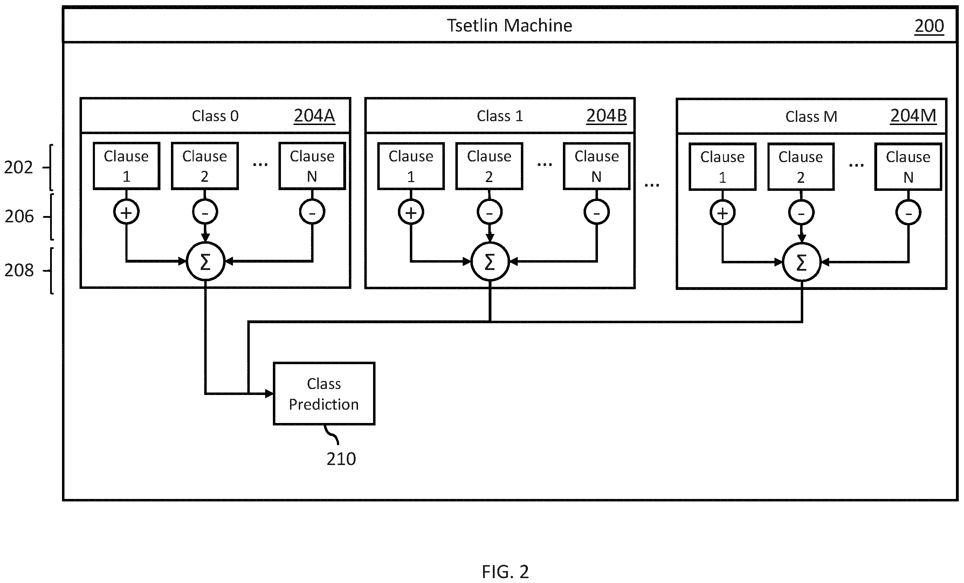

FIG. 2 shows a schematic overview of a Tsetlin machine. The architecture of a TM model 200 is shown.

Clauses 202 are grouped together for each class 204A-M, with an equal number of clauses 202 per class. The clause outputs are multiplied with an alternating positive or negative polarity 206 (referred to herein as positive clauses and negative clauses respectively) and summed 208 for each class. The polarity 206 allows each clause to learn both supporting and opposing propositions for their respective class 204. Upon summing the class votes across the whole system, the classification 210 is given by the class with the most votes.

The computation stops here at inference time. At training time, based on predicted class 210 and actual (i.e. ground truth) class, feedback is given to each TA to transition their state. The process repeats for all Boolean data points with the convergence of the TM 200 typically occurring within the first few epochs. An example of a TM training procedure is described in *"The tsetlin machine-a game theoretic bandit driven approach to optimal pattern recognition with propositional logic"* (Granmo, O.-C., arXiv:1804.01508, the contents of which are incorporated herein by reference).

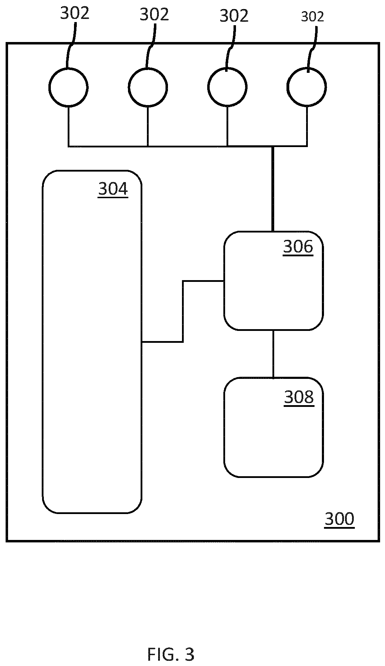

FIG. 3 shows a schematic overview of a sensor apparatus/system 300. The sensor apparatus / system 300 may be part of a user equipment (UE). Alternatively or additionally, the sensor apparatus / system 300 may be or be part of an Internet of Things (IoT) device. The system comprises one or more sensors 302, a power system 304 (e.g. a battery, a batteryless solution or any combination) thereof, one or more processors 306, one or more memories 308, and one or more wired or wireless communication means. The system/apparatus is configured to collect sensor data using the one or more sensors 302 and to classify the sensor data using the one or more processors 306 and an encoded Tsetlin machine stored in the memory 308. Additionally or alternatively, the sensor data can relate to internal functions of the device 300, for example, data on battery functions, memory functions, processor functions, radio interface functions, etc. or any combinations thereof.

The one or more sensors 302 may, for example, comprise one or more of: an acoustic sensor, a visual/optical sensor; a camera sensor, an environmental sensor (such as a temperature sensor, pressure sensor, humidity sensor etc.); a position and/or orientation sensor (e.g. a gyroscope, IMU (Inertial Measurement Unit), global navigation satellite system (GNSS) sensor); a physiological sensor (e.g. photoplethysmography, electroencephalogram, electrocardiogram, blood oxygen saturation, skin conductance, etc.); a force sensor; or the like, or any combination thereof. Many other examples are possible.

As an example, the system/apparatus 300 may be a sensor tag configured for acoustic sensing with a batteryless tag for monitoring environment conditions. The sensor tag maybe equipped with energy harvesting apparatus, one or more microphones, and other environment sensors. The sensor tag can leverage the systems and methods described herein to perform local inferences to detect and transmit only important events, improving the energy efficiency of the tag. The acoustic sensing may, for example, comprise keyword detection in spoken utterances.

As a further example, the system/apparatus 300 may be configured for visual sensing with a camera for monitoring environment condition, e.g., in agricultural firm. The system/apparatus 300 may comprise camera with energy harvesting apparatus that can leverage the systems and methods described herein to perform local image classification. Such a solution can be applied, for example, to vertical farming solutions.

As a further example, the system/apparatus 300 may be configured for multimodal sensing with camera and microphone, for example for industrial safety and surveillance applications.

The power system 304 may comprise a batteryless/energy harvesting power system. The power system 304 may capture/harvest ambient energy to power the sensor system/apparatus 300. For example, the power system 304 may capture ambient energy from solar, kinetic, temperature, radio frequency or other sources. The power system 304 may comprise one or more capacitors that are charged by the collected ambient energy.

The processor 306 and memory 308 are used intermittently to classify captured sensor data 302 into one of a plurality of classes using the TM model stored in the memory 308. The simple architecture of TMs makes task division easy without putting the burden on developers. Leveraging the fact that the compute of one class is independent of other classes, an intuitive task division strategy may be used in which all the operations related to one class are put in one task. This ensures minimal overhead for storing and restoring intermediate task buffers.

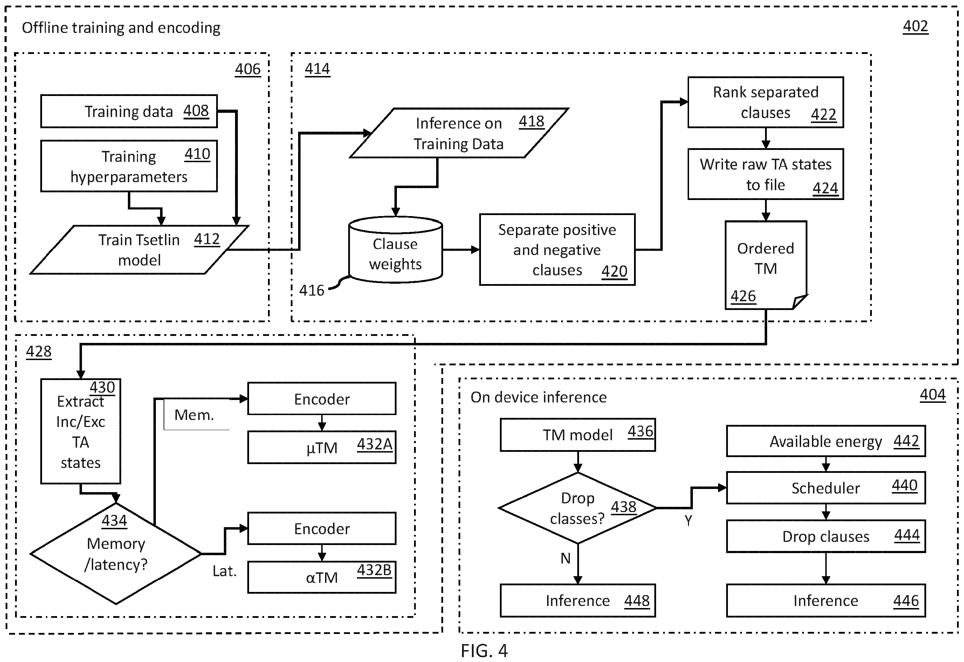

FIG. 4 shows a schematic overview of a method for the automated transition of Tsetlin Machines from training to optimised inference on microcontrollers. The framework is designed for training 402 and deploying 404 TM models on the apparatus 300, for example, on intermittently powered devices. The framework is built on top of three techniques, which may be used individually or together, to (1) reduce the memory footprint of a TM model enabling its deployment on resource constrained devices; (2) speed up model execution ensuring efficient inferences within the minimum energy budget; and (3) enable the model to flexibly adapt its computational complexity (i.e., latency) to accommodate variable energy.

The framework comprises a pipeline that automates the transition from a trained TM model to the deployment, for example, on a microcontroller. The pipeline may allow a user to decide whether to place precedence on either minimising memory footprint to scale to larger recognition tasks or minimising inference latency where energy efficiency is paramount. Once the model has been optimised for either memory footprint or latency, a user can optionally enable runtime adaptation to scale the model complexity at runtime.

Initially, the TM model is trained 406 with a training dataset 408 relevant to the task the TM model will be used for and a set of define hyperparameters 410 (e.g. number of classes, number of clauses, number of literals etc.). The training 412 of a TM model may, for example, follow the standard procedure designed by Granmo (Granmo, O.-C. "The tsetlin machine-a game theoretic bandit driven approach to optimal pattern recognition with propositional logic" arXiv: 1804.01508, the contents of which are incorporated herein by reference). The training dataset may, for example, comprise the MNIST (for handwriting classification), CIFAR-2 (for image classification) and KWS (speech recognition) datasets. Many other examples of training datasets are possible.

When the training 412 is converged, the pipeline may proceed to a clause ordering phase 414.

The core learning and computational element of the TM is the clause proposition. The evaluation of clauses at runtime allows each class in the TM to determine if a particular datapoint intersects with it or not through the clause polarities used in the class sum. Affecting the clauses (i.e., their number or the latency to compute each clause) is the main approach to influencing the latency of the entire model. This can be achieved by adding weights 416 to each clause proposition. Clause weighting may be achieved by running the TM's inference process on the training data again (using clause outputs for computing class sums and then selecting the highest class sum for classification) after the training is completed. The involvement of each clause may be tallied based on the number of times it produces a clause output of 1 across all datapoints in the training dataset. The clauses may then be ranked in each class in descending order based on their weights. This creates the ordered TA states model. Through this ranking, the most useful or 'impactful' clause propositions are placed first.

The benefit of this clause ranking is seen at runtime; based on the available energy the framework can evaluate only a specified number of clauses in each class, given the most impactful clauses are evaluated first the accuracy degradation is minimal.

Weights 416 are assigned to the clause propositions based on their involvement in correct classifications by performing an inference routine 418 on the training dataset. Datapoints in the training dataset, e.g. every datapoint in the training dataset, is passed through the trained TM model and a classification is produced for each of them. For each classification the output of all clauses in the TM model is examined. If the model classified the current datapoint correctly (i.e., predicted class = ground truth class), the weight for clauses in the predicted class with positive polarity are incremented, e.g. by one, while the weight for clauses with negative polarity is decremented, e.g. by one. Instead, if the model produces a wrong classification, the weight for clauses with negative polarity is incremented, e.g. by one and the weight for clauses with positive polarity is decremented, e.g. by one. High-weighted positive polarity clauses are effective in supporting a classification for the class it belongs to whereas high-weighted negative polarity clauses are effective in opposing a classification for the class it belongs to. An example of the weighting process is provided in the following algorithm:

---

**Algorithm 1:** Clause Weighting – Used on every datapoint.

---

**Input** : $M; N; Ground\_Truth$

1 // $M$ - no. classes, $N$ - no. clauses, $Ground\_Truth$ - Actual Class

2 $p\_W \leftarrow 0; n\_W \leftarrow 0;$ // positive and negative polarity Clause Weights

3 $p\_C; n\_C;$ // positive and negative polarity Clauses

4 $pred\_Cl;$ // TM inference prediction

5 **for** $j \leftarrow 0$ **to** $M$ **do**

6      **if** $(pred\_Cl == j) and (j == Ground\_Truth)$ **then**
         // Correct prediction

7          **for** $k \leftarrow 0$ **to** $N$ **do**

8              **if** $p\_C_k^j == 1$ **then**

9                  $p\_W_k^j + +;$

10              **if** $n\_C_k^j == 1$ **then**

11                  $n\_W_k^j - -;$

12      **if** $(pred\_Cl == j) and (j! = Ground\_Truth)$ **then**
         // Wrong prediction

13          **for** $k \leftarrow 0$ **to** $N$ **do**

14              **if** $p\_C_k^j == 1$ **then**

15                  $p\_W_k^j - -;$

16              **if** $n\_C_k^j == 1$ **then**

17                  $n\_W_k^j + +;$

---

The positive clauses and negative clauses are separated 420 and ranked 422 based on their respective weights. The two sets of clauses are then joined using the signed ordering shown in Figure 2, i.e. with alternating positive and negative clauses. The separation 420 of clauses into the two clause types (positive and negative) keeps track of polarity, which is one aspect at inference time, where each ranked clause is multiplied with its appropriate sign multiplier.

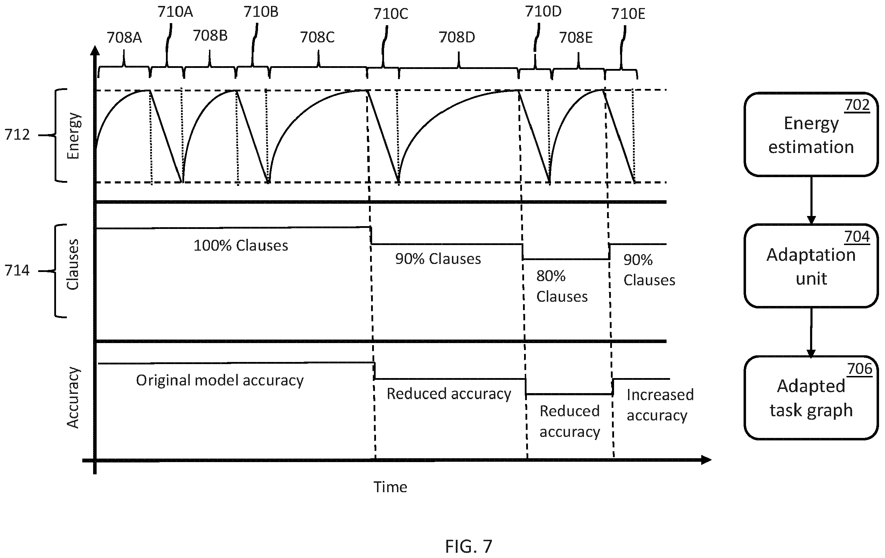

The TA states for the ordered TM are written 424 to a file 426 (e.g. "Ordered TM"). This is the TM model that will be encoded and deployed on-device to perform low-power and/or intermittent inferences. The clause ordering is a computationally simple operation that is performed only once, after the model has been trained. It enables inference complexity adaptation while ensuring minimal drop in accuracy. Clauses with a lower contribution to a correct classification can be dropped earlier. One example of the use of clause ordering for an adaptive TM model is described below in relation to FIG. 7.

Following training 406 and, if used, the ordering 414, the TM model may be encoded 428 using an encoding scheme as a way to remedy the large model sizes post-training and reduce inference latency. The encoding schemes exploit a fundamental property of the clause-based learning mechanism in the TM, i.e., the number of TA exclude decisions for a literal far outnumber the number of TA include decisions. This occurs through the feedback process and is one design choice as clauses pick out only a few key features and thus are less prone to overfitting. This results in a sparse Boolean space that can undergo lossless compression into memory- and latency-optimised data structures using the encoding schemes described herein.

During encoding 428, the include/exclude states of the TAs in the TM are extracted 430. One or more encoding schemes 432A-B are selected based on device/user requirements/constraints 434. In the example shown, the requirements/constraints 434 are whether memory footprint or latency should be prioritised.

The encoding schemes reduce the memory footprint compared to a "vanilla" TM. Some encoding schemes are particularly designed to decrease memory usage further (referred to herein as "$\mu$TM" 432A), while others are focussed on reducing latency at inference time (referred to herein as "$\alpha$TM" 432B). In some implementations, a user may be able to select the trade-off between memory and latency for their application. The generated models are then deployed on the target microcontroller.

In some implementations, a user can decide to encode the same model with a plurality of encoding schemes,

e.g. μTM 432A and aTM 432B, and then at runtime select which one to use based on the application requirements (e.g., faster inference or reduced memory footprint during inference). This is enabled by the encoding schemes, which significantly reduce the model size, allowing more than one model to be stored on the limited flash memory of a batteryless device.

Once encoded, the model is ready to be deployed 404 to a device, e.g. a batteryless device. When the encoded TM model 436 is compiled for the target hardware platform, the appropriate runtime components to support the encoding method(s) are linked with a user application. Additionally, if the user requires 438 adaptation of the model complexity based on available energy, the scheduler 440 running on the device will estimate the amount of energy 442 currently being harvested and select which clauses to drop 444 to improve the system throughput. The clauses are dropped in reverse order compared to the weights computed at train time. Hence, the clauses that contribute the least to a correct prediction are dropped first. This approach can increase the number of inferences completed in a unit of time while ensuring a minimal drop in accuracy. Notice that the adaptation technique is independent of the two encoding schemes and can be applied on top of each of them, on its own or disabled entirely.

Once the clauses are dropped, inference 446 is performed with the adapted clause-set TM model. If power adaptation is not required or present, inference 448 is performed with the full TM model 436. At inference time, one or more sets of sensor data collected by the device are classified using the encoded TM model 436.

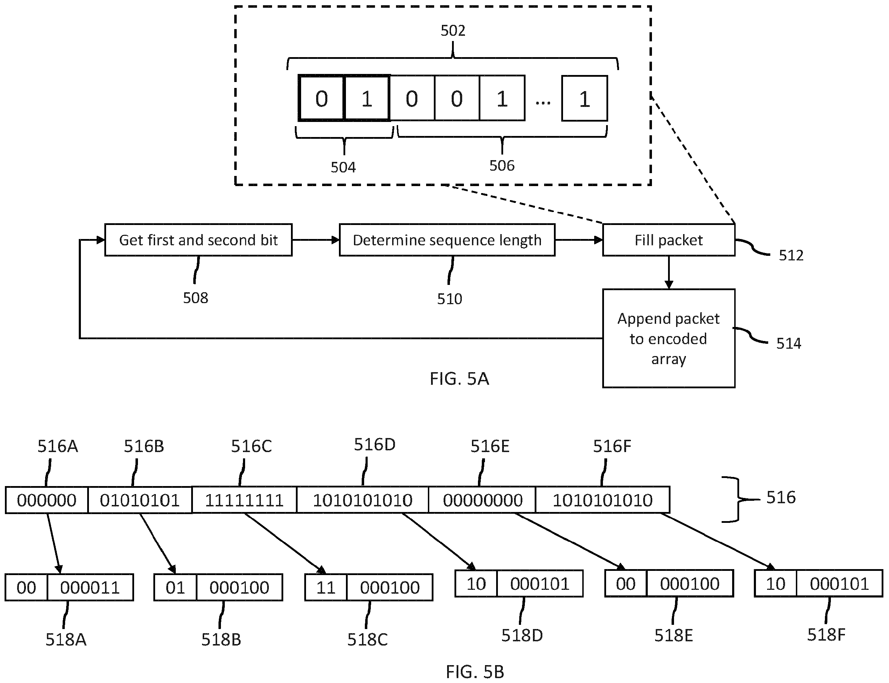

FIG. 5A shows a schematic example of a method 500 for encoding a Tsetlin machine. Such encoding techniques are referred to herein as micro TMs (μTM). They are designed to reduce the memory footprint of the TM model as much as possible. FIG. 5B shows an example of a TM encoding produced by this encoding scheme.

At the foundation of the μTM encoding, there are two intrinsic properties of TM models: 1) there is no need to store the actual value of each TA state but just their binary include/exclude decision, and 2) typically the number of exclude decisions far outnumber that of the include decisions. This implies that if the excludes are represented with o and include are represented with 1 (or vice versa), repeating patterns with very large runs of os separated by a single or few is will be observed. For example, in a TM where each TA has 200 states and there are 45240 Tas altogether, only 84 Tas may have include decisions. The substantial imbalance between the include and exclude decisions allow for very large runs of excludes separated by few includes, enabling significant compression ratios to be achieved.

This characteristic of TM models can be exploited to design encoding schemes to efficiently represent TM models for on-device inference. The μTM encoding scheme is based on an adapted run-length encoding, as shown in FIG. 5A. The idea is that instead of simply tallying the runs of the is and 0s in the TA states sequence, as done with the traditional run-length encoding, the number of repeating sequences of two bits (i.e., 00, 01, 10 or 11) are counted.

The encoded representation of the TM using this method comprises a plurality of packets 502 (also referred to herein as "blocks") of a fixed size, N (e.g. 8bits, 16bits, 32bits). Each packet 502 comprises a key 504 and an N-2 bit number 506. The key indicates a two bit include/exclude pattern (e.g. 00, 01, 10, or 11, representing two excludes, an exclude followed by an include, an include followed by an exclude and two includes respectively). The remaining N-2 bit number 506 of the pattern encode the number of times the patter is repeated (i.e. a repetition number) before either the pattern of include/exclude states of the TM changes or the maximum number of repetitions that is representable by the packet 502 is reached.

During the encoding, the TA states of the TM model are converted into an include/exclude representation, e.g. a sequence of ones and zeros that represents the include/exclude decision of each TA. The first and second bit of this representation are determined 508, and used to form the key 504 of the first encoded packet. The number of repetitions of this key before either (i) the pattern changes or (ii) the maximum number of repetitions that is representable by the packet is reached is then determined, i.e. the sequence length determined 510. The sequence length is used to fill 512 the remaining N-2 bits 506 of the packet. The packet is then appended to an array 514. The next two bits of the include/exclude representation (i.e. the next two bits after the section represented by the packet) are then determined, and the process repeated until the whole TM model is encoded.

An example of such an encoding is shown in FIG. 5B. This is an example of an 8-bit (int8) encoding scheme, i.e. each packet has 8 bits. The TM is represented as a sequence 516 of ones and zeros that represents the include/exclude decision of each TA in the TM model, and is encoded into an array comprising a plurality of 8-bit packets/blocks 518A-F.

A first sub-sequence 516A in the representation consists of a run of 6 zeros, e.g. six exclude decisions. This is encoded into a first block 518A, comprising a key value of 00 and a 6-bit number indicating that the key value is repeated three times, i.e. 000011. A second sub-sequence 516B in the representation consists of four alternating exclude and include decisions. This is encoded into a second block 518B, comprising a key value of 01 and a 6-bit number indicating that the key value is repeated four times, i.e. 000100. A third sub-sequence 516C in the representation consists of a run of 8 ones. This is encoded into a third block 518C, comprising a key value of 11 and a 6-bit number indicating that the key value is repeated four times, i.e. 000100. A fourth sub-sequence 516D in the representation consists of five alternating include and exclude decisions. This is encoded into a fourth block 518D, comprising a key value of 10 and a 6-bit number indicating that the key value is repeated five times, i.e. 000101. A fifth sub-sequence 516E in the representation consists of a run of 8 zeros, e.g. eight exclude decisions. This is encoded into a fifth block 518E, comprising a key value of 00 and a 6-bit number indicating that the key value is repeated three times, i.e. 000100. A sixth sub-sequence 516F in the representation consists of five alternating include and exclude decisions. This is encoded into a sixth block 518F, comprising a key value of 10 and a 6-bit number indicating that the key value is repeated five times, i.e. 000101.

In some implementations, for a plurality of packet sizes (e.g. the three integer types int8, inti6, and int32), the TA states of the trained model are iterated and for each 2-bit pattern (i.e., Key), packets are filled with the Key and the length of the sequence. The packets are then appended to the Encoded Array to create an Encoded Array for each packet size in the plurality of packet sizes. From these arrays, the encoded array that provides the best compression maybe used, i.e., has encoded array with the fewest elements compared to the original TA states.

Micro-TM offers two advantages over traditional run length encoding. Firstly, with $\mu$TM alternating runs of is and 0s can be accounted for using the Key, whereas for traditional run length encoding we would have to store each alternating TA state into its own integer packet, resulting in a lower compression ratio. The encoding of alternating states is one design choice for addressing datasets where there are more includes. Secondly, when decoding, the Key allows for two TA states to be decoded at once, benefitting inference latency. In fact, the FRAM (Ferroelectric Random-Access Memory)-used to store program code and non-volatile program state- for example on MSP430FR5xxx types of MCUs (Microcontroller Units), is much slower than the on-chip SRAM (Static Random-Access Memory) and the compiler inserts wait cycles if there is a mismatch between the system clock and FRAM max speed. Hence, high compression ratios result in a reduced number of memory operations and consequent reduction in latency when compared to "vanilla" TMs. The run length encoding-based compression approach provides a trade-off between compile-time compression ratio and run-time decoding latency. The simplicity of $\mu$TM allows for faster decoding and therefore an energy-efficient inference.

Additionally, notice that $\mu$TM is a lossless compression since the original include/exclude sequence can be recovered, resulting in zero accuracy loss at inference time. This is an advantageous feature of the framework, because it can result in the same accuracy achieved by the full TM model at training time being conserved at inference time. This is one aspect when designing and deploying recognition tasks on resource constrained devices.

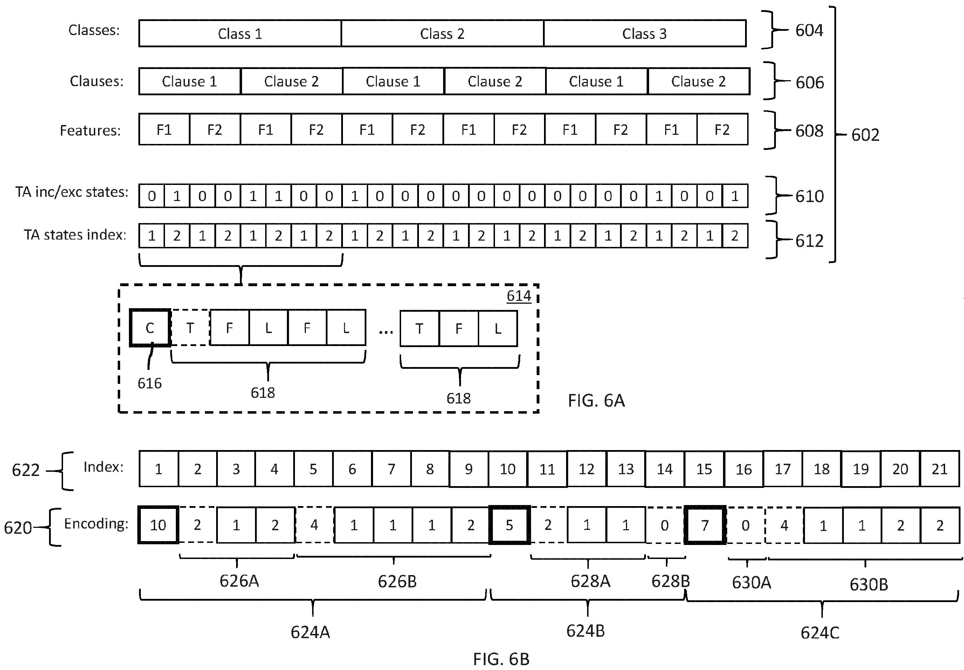

FIG. 6A shows a further schematic example of a method 600 for encoding a Tsetlin machine 602. Such encoding techniques are referred to herein as alpha TMs ($\alpha$TMs). They are designed to reduce the memory footprint of the TM model while improving latency. FIG. 6B shows an example of a TM encoding produced by this encoding scheme.

Alpha-TM aims to reduce the total inference latency as much as possible while also reducing the memory footprint. Both aTM and $\mu$TM encoding methods can provide upwards of 90% model size compression, but aTM provides greater benefits in terms of latency reduction.

The reduction in latency is possible through the role of the include in the clause proposition. When calculating the clause output the exclude states make the value of their respective input literal redundant. Therefore only the includes need to be calculated when evaluating the clause output. In other words, if a TA state is an exclude (represented as a logic 0), the output of the logic OR between that TA state and the corresponding input literal will be 1, regardless of the value of the literal. This means that at runtime, the clause computations for exclude states can be avoided, saving time during the inference. For include states instead, the value of the input literal matters and needs to be carried forward in the clause computation. This is beneficial from a latency perspective due to the very low include to exclude ratio of trained models, as discussed above. The aTM encoding scheme exploits this observation.

The upper part of FIG. 6A shows a representation of a Tsetlin machine 602. The Tsetlin machine comprises a plurality of classes 604 (i.e. the classification classes that can be output by the machine). Each class 604 is associated with a plurality of clauses 606, each of which takes a plurality of features 608 as input. Each feature F 608 comprises two literals 612 - the feature itself (denoted with index 1) and its logical negation (denoted with index 2). Each literal 610 has a corresponding TA, with a corresponding include/exclude TA state 610 (denoted 0 for an exclude state and 1 for an include state). The example shown has three classes 604, each with two clauses 606, with two features 608 per clause.

The basis of the encoding is centred on identifying the include decisions in the TA states 610 post-training. The feature 608, literal 612, clause 606, and class 604 that each include state corresponds to is found. This information is sequentially encoded into a series of blocks 614, each block corresponding to a class 604 of the Tsetlin machine 602.

Each block 614 begins with an index, C, 616 (also referred to herein as an initial block index/element, or block length index/element) indicating the length of the block, e.g. where the block corresponding to the next class starts or where the current block ends. For example, the index C 616 may be an offset value from the current location to the position where the next class encoding starts. Alternatively, it may encode the index of the position where the next class encoding starts.

The block length index 616 is followed by one or more sub-blocks 618 that correspond to clauses in the class represented by the current block. Each sub-block comprises a sub-block length element, denoted T, which encodes a length of the rest of the sub-block 618, i.e. the number of F and L elements in the sub-block 618. For each class, there may be as many sub-block length elements as there are clauses in the class. If there are no include decisions for a clause, the sub-block length element, T, may have a value of zero, and no pairs of F-L indices are present in the sub-block.

In some implementations, sub-blocks 618 corresponding to clauses with no include decisions that occur at the end of a class may be skipped in the encoded representation without ambiguity, as the initial block index can be used to determine when a block ends.

The sub-block length element, T, is followed by pairs of indices, F and L, each pair indicating a feature 608 and literal 608 in a clause 606 in the class 604 that is an include decision. The index F encodes the feature number of the include decision, e.g. takes a value between 1 and the total number of clauses per class. The index L encodes the literal that will be included, e.g. takes a value of 1 or 2.

In other words, the encoding starts with an index 616, C, indicating the index of the next class in the encoded array, then iterates through the clauses 606 in each class to identify the includes. To identify the includes within the encoded representation, first the feature index, F, is taken and then a literal index, L, is used to identify which literal in the feature is the include. Notice that each feature has two literals, the feature itself and its negated form, and each literal has its own TA state. This is represented in Figure 6A by the fact that each feature in the Features array stretches across 2 TA states.

At runtime, only the includes present in each literal are iterated through when performing the clause computations, hence, effectively skipping computations and reducing latency.

Similarly to $\mu$TM, this encoding scheme is lossless since the trained TM model can be completely reconstructed after it has been encoded. Hence, also aTM ensures the accuracy of the model is not altered after its deployment on resource constrained devices.

FIG. 6B shows an example of an aTM encoding 620 of the TM 602 of FIG. 6A. For convenience, the indices 622 of the encoding 620 are also shown.

A first block 624A of the encoding 620, extending from index 1 to index 9, encodes the first class of the TM 602. The block length element of the first block 624A (i.e. the element at index 1) encodes the offset to where the block encoding the second class 624B starts. In this case, the second block 624B starts at index 10, so the offset value is 10. The first block comprises a first sub-block 626A that encodes the first clause of the first class, and a second sub-block 626Bthat encodes the second clause of the first class.

The first sub-block 626A starts with a sub-block length value of two, indicating that there is only one include decision in the first clause of the first class. The sub-block length value is followed by single F-L pair, comprising a feature index of one, and a literal value of two, indicating that the include decision is for the second literal of the first feature.

The second sub-block 626B starts with a sub-block length value of four, indicating that there are two include decisions in the second clause of the first class. The sub-block length value is followed by two F-L pairs. The first F-L pair comprises a feature index of one, and a literal value of one, indicating that the include decision is for the first literal of the first feature. The second F-L pair comprises a feature index of one, and a literal value of two, indicating that the include decision is for the second literal of the first feature.

A second block 624B of the encoding 620, extending from index 10 to index 14, encodes the second class of the TM 602. The block length element of the second block 624B (i.e. the element at index 10) encodes the offset to where the block encoding the third class 624C starts. In this case, the third block 624C starts at index 15, so the offset value is 5. The second block comprises a first sub-block 628A that encodes the first clause of the second class, and a second sub-block 628B that encodes the second clause of the second class.

The first sub-block 628A starts with a sub-block length value of two, indicating that there is only one include decision in the first feature of the second class. The sub-block length value is followed by single F-L pair, comprising a feature index of one, and a literal value of one, indicating that the include decision is for the first literal of the first feature.

The second sub-block 628B starts with a sub-block length value of zero, indicating that there are no include decisions in the second clause of the second class. Note that, in some embodiments, this sub-block may not need to be included at all; since it occurs at the end of a class, the block length element may be reduced by one and this block removed without introducing any ambiguity.

A third block 624C of the encoding 620, extending from index 15 to index 21, encodes the third class of the TM 602. The block length element of the third block 624C (i.e. the element at index 15) encodes the offset to the end of the encoding or where the block encoding a fourth class, if present, starts. In this case, the encoding ends at index 22, so the offset value is 7. The third block comprises a first sub-block 630A that encodes the first clause of the second class, and a second sub-block 630B that encodes the second clause of the second class.

The first sub-block 630B starts with a sub-block length value of zero, indicating that there are no include decisions in the first clause of the second third.

The second sub-block 630B starts with a sub-block length value of four, indicating that there are two include decisions in the second clause of the third class. The sub-block length value is followed by two F-L pairs. The first F-L pair comprises a feature index of one, and a literal value of one, indicating that the include decision is for the first literal of the first feature. The second F-L pair comprises a feature index of two, and a literal value of two, indicating that the include decision is for the second literal of the second feature.

FIG. 7 shows a schematic example of a power-aware adaptive method 700 of using a Tsetlin machine. The method adapts the model complexity at runtime in dependence on the available energy. Such technique can be applied to both $\mu$TM and aTM models, as well as being applied on its own. The method allows TM models to be effectively executed on batteryless devices that extract energy from ambient conditions.

The principle behind the method is to estimate the amount of energy available 702 to the device and adapt the TM model complexity 704 to generated an adapted TM model 706 (i.e. an adapted task graph). For example, the adaption may drop clauses if the energy is scarce, and vice versa, add back clauses if the energy is abundant. The device off-times 708A-E and on-times 710A-E may be used as estimates of available energy (i.e., adaptation signals). The on-time 710A-E represents the time when the device is active and executing code, during which the energy available 712 to the device will drop. The off-time 708A-E is the interval during which the device is off and the energy storage is recharging, during which the energy available 712 to the device increases.

As an example, the REHASH model may be used to estimate the available energy (see, for example "Flexible, Developer Focused, Heuristic Adaptation Platform for Intermittently Powered Computing", Bakar, A. et al., Proceedings of the ACM on Interactive, Mobile, Wearable and Ubiquitous Technologies 5, 3 (2021), 1-42, the contents of which are incorporated herein by reference). In some implementations, an internal MSP430's RTC (Real Time Clock) may be used to measure the on-time, while an external RTC may be used for the off-time. Alternative approaches to measure time while the device is off include a remanence-based timekeeper.

Thresholds may be used to determine when to remove or add clauses to the TM model. At each reboot of the system, the system may check the off-time 708A-E and, if it is greater than an off-threshold, indicating that less energy is being harvested, the system will drop one or more (e.g. a plurality) of the clauses 714 of the TM model based on a drop-rule. The drop-rule may, for example, be a fixed number of clauses or a fixed fraction/percentage of clauses (e.g. 10%). This allows the TM model to be executed using less energy. However, if the off-time is lower than the off threshold, clauses may be added back to the TM model, if any were dropped previously, since more energy is being harvested and the energy storage is recharging faster. The clauses may be added based on an add-rule. The add-rule may, for example, be a fixed number of clauses or a fixed fraction/percentage of clauses (e.g. 10%).

The clauses 714 to drop are selected based on an ordered/ranked list of clauses. The ordered list of clauses may be based on weightings of the positive and negative clauses that indicated the relative importance of clauses to the TM model, as described above in relation to FIG. 4. Clauses at the bottom of this ordered list (i.e. clauses whose weights indicate that they are least important for accurate classification) are dropped first.

Alternatively or additionally, the model can compute more clauses when the harvested energy is sufficiently high to keep the system running continuously, without interruption. The on-time is used to detect such condition, with clauses added back into the model when the on-time is above an on-threshold. The on-time may be checked at the end of each inference. As long-term duty-cycling approaches are not viable for battery-free systems, as energy is scarce and intermittent, running inferences more or less continuously whenever energy is available is a better alternative to wasting energy on keeping the MCU in a sleep state for long periods (seconds and minutes). This would deplete the energy stored in the capacitor bank due to leakage.

The clauses 714 to add are selected based on the ordered list of clauses. For example, the highest ranked clauses that are not currently used in the TM model are added first (i.e. the most recently removed clauses are added back first).

This is a practical approach, with low overhead, to estimate the current amount of energy available 712 and it is used to take a short-term decision on the next TM model configuration to run (i.e. which clauses 714 to use). While reducing the number of clauses 714 may reduce the overall accuracy of the model 716, the weighted list of clauses ensures that the least useful clauses are dropped first, minimising the loss of accuracy associated with executing a partial TM model.

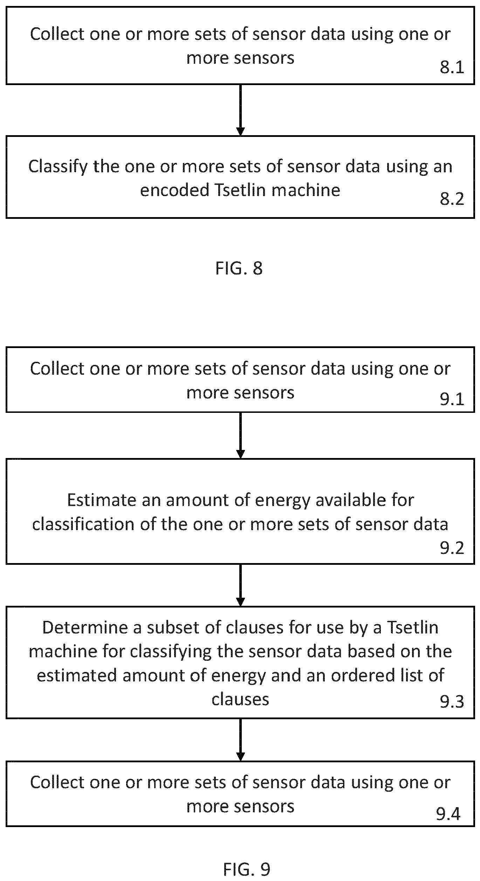

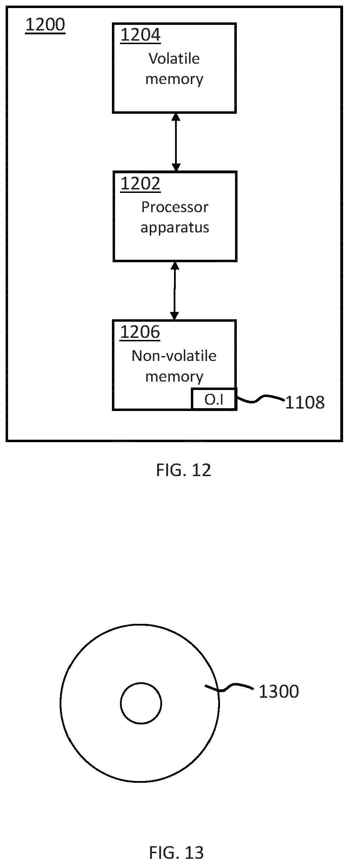

FIG. 8 shows a flow diagram of an example method for classifying sensor data. The method may be performed by a sensor system/apparatus, for example the apparatus described in relation to FIG. 3 or FIG. 12.

At operation 8.1, one or more sets of sensor data are collected using one or more sensors. The sensor data may, for example, comprise one or more of: optical sensor data; acoustic sensor data; environmental sensor data; positional and/or orientation sensor data; or the like.

At operation 8.2, the one or more sets of sensor data are classified into one of a plurality of classes using an encoded Tsetlin machine. The encoding of the TM is based on the number of exclude decisions of the TM outnumbering the number of include decisions. The Tsetlin machine maybe encoded using any of the $\mu$TM and/or aTM encoding schemes described herein.

The method may further comprise the use of the energy adaptation scheme described above in relation to FIG. 7 and below in relation to FIG. 9.

FIG. 9 shows a flow diagram of a further example method for classifying sensor data. The method may be performed by a sensor system/apparatus, for example the apparatus described in relation to FIG. 3 or FIG. 12.

At operation 9.1, one or more sets of sensor data are collected using one or more sensors. The sensor data may, for example, comprise one or more of: optical sensor data; acoustic sensor data; environmental sensor data;

positional and/or orientation sensor data; or the like.

At operation 9.2, an amount of energy available for classification of the one or more sets of sensor data is estimated. The amount of energy available for classification may be estimated based on one or more threshold off-times and/or one or more threshold on-times.

For example, if the time the apparatus has been in an off-state exceeds a threshold off-time it is an indication that the available energy is less than a threshold value associated with the threshold off time. If the time the apparatus has been in an off-state does not exceed a threshold off-time it is an indication that the available energy is greater than a threshold value associated with the threshold off time. For the on-state, if the time the apparatus has been in an on-state exceeds a threshold on-time it is an indication that the available energy is greater than a threshold value associated with the threshold on time

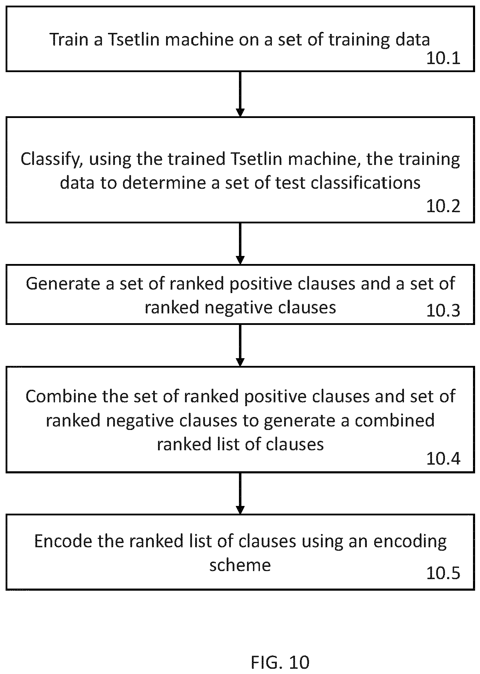

At operation 9.3, a subset of clauses for use by a Tsetlin machine for classifying the sensor data is determined based on the estimated amount of energy and an ordered list of clauses. The ordered list of clauses may comprise an alternating list of positive and negative clauses, with the order of the positive clauses and negative clauses based on their respective importance in the TM model, for example as described in relation to FIG. 4 and FIG 10.

At operation 9.4, the one or more sets of sensor data are classified using the Tsetlin machine comprising the determined clauses.

FIG. 10 shows a flow diagram of an example method for encoding a TM for use by a resource constrained sensor device. The method may be performed by a computer system/apparatus, such as the system/apparatus described in relation to FIG. 12 or FIG 3.

At operation 10.1, a Tsetlin machine is trained on a set of training data. The training data may comprise a plurality of training examples. Each training example may comprise one or more sets of sensor data and a corresponding ground-truth classification of the sensor data. The Tsetlin machine may be trained using any method known in the art, for example the method described in *"The tsetlin machine-a game theoretic bandit driven approach to optimal pattern recognition with propositional logic"* (Granmo, O.-C., arXiv:1804.01508, the contents of which are incorporated herein by reference).

At operation 10.2, the trained Tsetlin machine is used to classify the training data to determine a test set of classifications. For each of a plurality of training examples, the TM is used to generate a respective test classification.

At operation 10.3, a set of ranked positive clauses and ranked negative clauses is generated based on the test set of classifications. Depending on the value of the test classifications, weights are assigned each clause in the TM, and the ordered lists generated based on the respective value of the weights, e.g. with higher weighted clauses at the top of the list.

The weights may be assigned based on a comparison of the test classifications with their respective ground truth classifications.

If a test classification matches the ground truth classification, then the weights of clauses in the class corresponding to the correct classification are adjusted. Positive clauses that output a positive decision (e.g. a 1) have their weights increased (e.g. incremented by one). Negative clauses that output a positive decision (e.g. a 1) have their weights decreased (e.g. decremented by one).

If a test classification does not the ground truth classification, then the weights of clauses in the class corresponding to the correct classification are adjusted in the opposite way. Positive clauses that output a positive decision (e.g. a 1) have their weights decreased (e.g. decremented by one). Negative clauses that output a positive decision (e.g. a 1) have their weights increased (e.g. incremented by one).

At operation 10.4, the set of ranked positive clauses and set of ranked negative clauses are combined to form a combined ranked list of clauses. The combined list alternates between positive clauses and negative clauses, i.e. they are interwoven, with the positions of the positive and negative clauses based on their positions in the ordered list of positive clauses and ordered list of negative clauses respectively.

At operation 10.5, the ranked list of clauses is encoded using an encoding scheme. The encoding scheme may be any of the $\mu$TM and/or aTM encoding schemes described herein. The encoded list of clauses (i.e. the encoded TM) is then deployed to a device, such as the system/apparatus described in relation to FIG. 3.

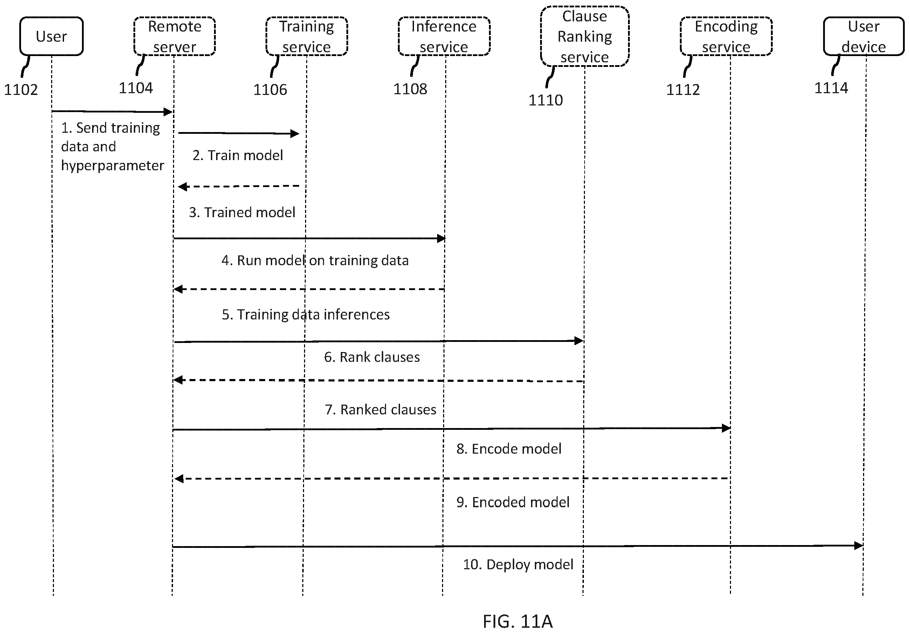

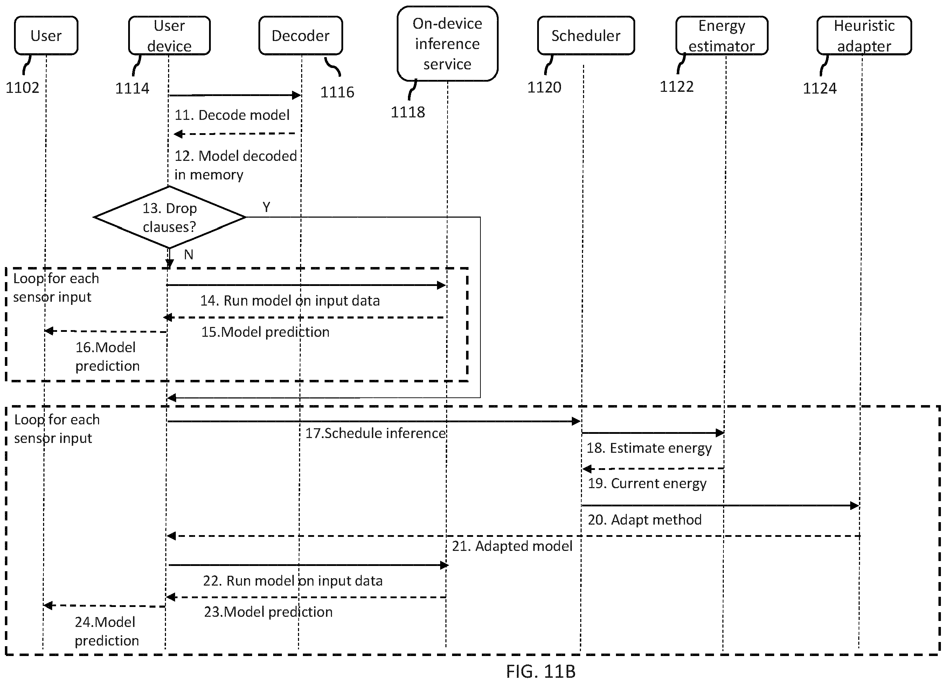

FIG.s 11A and 11B show schematic example of a scenario where a user deploys a Tsetlin Machine (TM) model onto a user device, for example, the apparatus/system 300. The user device is configured with one or more of the techniques described herein, and is configured to carry out inferences on sensor data (e.g., camera, microphone, etc.), for example to perform inference continuously on the sensor data. The components/software processes/software modules in dashed boxes (1104, 1106, 1108, 1110 and 1112) in the FIG 11A maybe hosted on a remote server/computer (i.e., cloud computing) or distributed servers, while the components/software processes/software modules in solid boxes (1102, 1114, 1116, 1118, 1120, 1122 and 1124) may be run/executed on an end-user device, such as the apparatus/system 300 (e.g., smartphones, microcontrollers, IoT devices).

Referring to FIG. 11A, at operation 1, a user 1102, user device 114 or any other device sends training data and hyperparameters to a remote server 1104 to train a TM model. The training data includes pairs of input samples and ground truth class for each sample (i.e., supervised learning). The hyperparameters include, but not limited to, number of clauses, number of states, etc.

At operation 2, the remote server 1104 sends a request to train the model using the user's data and hyperparameters to a training service 1106. At operation 3, the training service 1106 trains the model following a TM training procedure and returns the trained TM model to the remote server 1104.

At operation 4, the remote server 1104 sends a request to an inference service 1108 to run the model on all training data. At operation 5, the inference service 1108 runs the model inference on all training data points, collects the model's inference for all of them and sends them to the remote server 1104.

At operation 6, the remote server 1104 sends a request to rank the clauses of the trained model to a clause ranking service 1110. At operation 7, the clause ranking service 1110 goes through all the inferences. For each inference, the clause ranking service 1110 inspects the output of all clauses. If the model classified the current data point correctly (i.e., predicted class = ground truth class), the weight for clauses with positive polarity is incremented by one, while the weight for clauses with negative polarity is decremented. Instead, if the model produces a wrong classification, the weight for clauses with negative polarity is incremented and the weight for clauses with positive polarity is decremented. The algorithm for this is described in more detail above with reference to FIG. 4; this algorithm is executed for each sample in the training set. The positive clauses and negative clauses are separated and ranked separately from higher weight to lower weight. The two ranked clauses are then joined in the same signed ordering. At the end, the clause ranking service 1110 returns the ranked clauses to the remote server 1104.

At operation 8, the remote server 1104 sends a request to encode the model to an encoding service 1112 specifying which kind of encoding to apply (e.g. μTM, aTM or a combination of both). At operation 9, the encoding service 1112 encodes the TM model based on the specified encoding scheme following any of the encoding methods described herein and returns the encoded model to the remote server 1104.

At operation 10, the remote server 1104 deploys the model to a user device 1114.

Referring now to FIG. 11AB, at operation 11 the user device 1114 sends a request to a decoder 1116 to decode the TM model. At operation 12, the decoder 1116 decodes the TM model and places it in the memory of the user device 1114.

At operation 13, the user device 1114 decides if it wants to drop clauses at runtime or not in order to reduce energy demand. This may be based on a selection by the user 1002 or determined automatically.

If not clauses are not to be dropped, then at operation 14 the user device 1114 sends a request to an on-device inference service 1118 to run the model on a current set of input data, e.g. sensor data. At operation 15, the on-device inference service runs the model and returns the prediction to the user device 1114. At operation 16, the user device 1114 returns the prediction to the user 1102. This process is repeated in a loop for each sensor input, and may be performed continuously.

If not clauses are not to be dropped, then at operation 17 the user device 1114 sends a request to schedule an inference to a scheduler 1120. At operation 18, the scheduler 1120 requests a current energy level from an energy estimator 1122. At operation 19, the energy estimator 1122 estimates the current energy level, for example as described above in relation to FIG. 7, and returns it to the scheduler 1120.

At operation 20, the scheduler 1120 send a request to adapt the model based on the current energy level to a heuristic adapter 1124. At operation 21, the heuristic adapter 1124 decides how many clauses to drop or add, as described above in relation to FIG. 7, adapts the model (i.e., removes or adds clauses) and at operation 21 sends it back to the user device 1114 to perform the inference.

At operation 22, the user device 1114 sends a request to the on-device inference service 1118 to run the adapted model on the current input data. At operation 23, the on-device inference service 1118 runs the model and returns the prediction to the user device 1114. At operation 24, the user device 1114 returns the prediction to the user 1102.

Figure 12 shows a schematic example of a system/apparatus 1200 for performing any of the methods described herein. The system/apparatus shown is an example of a computing device. It will be appreciated by the skilled person that other types of computing devices/systems may alternatively be used to implement the methods described herein, such as a distributed computing system. The system/apparatus 1200 may form at least a part of a user equipment (UE) and/or an apparatus 300, for example, a mobile communication device, a smart phone, a smart watch, a smart ring, a smart speaker, a smart meter, a personal computer, an earbud device, a smart headset, an augmented reality (AR) device/classes, a virtual/extended reality (VR/XR) goggle, a television device, a still/video camera device, a network access point, a network router, a drone, a robot, a rover, an IoT device, etc. or any combination thereof.

The apparatus (or system) 1200 comprises one or more processors 1202. The one or more processors control operation of other components of the system/apparatus 1200. The one or more processors 1202 may, for example, comprise a general-purpose processor. The one or more processors 1202 may be a single core device or a multiple core device. The one or more processors 1202 may comprise a Central Processing Unit (CPU) or a graphical processing unit (GPU). Alternatively, the one or more processors 1002 may comprise specialised processing hardware, for instance a RISC (Reduced Instruction Set Computer) processor or programmable hardware with embedded firmware or Microcontroller Unit (MCU). Multiple processors maybe included.

The system/apparatus 1200 comprises a working or volatile memory 1204. The one or more processors may access the volatile memory 1204 in order to process data and may control the storage of data in memory. The volatile memory 1204 may comprise RAM of any type, for example, Static RAM (SRAM) or Dynamic RAM (DRAM), or it may comprise Flash memory, such as an SD-Card.

The system/apparatus comprises a non-volatile memory 1206. The non-volatile memory 1206 stores a set of operation instructions 1208 for controlling the operation of the processors 1202 in the form of computer readable instructions. The non-volatile memory 1006 may be a memory of any kind such as a Read Only Memory (ROM), a Flash memory or a magnetic drive memory.

The one or more processors 1002 are configured to execute operating instructions 1208 to cause the system/apparatus to perform any of the methods described herein. The operating instructions 1208 may comprise code (i.e. drivers) relating to the hardware components of the system/apparatus 1200, as well as code relating to the basic operation of the system/apparatus 1200. Generally speaking, the one or more processors 1202 execute one or more instructions of the operating instructions 1208, which are stored permanently or semi-permanently in the non-volatile memory 1206, using the volatile memory 1204 to store temporarily data generated during execution of said operating instructions 1208.

Further, the system/apparatus 1200 comprises one or more wired and/or wireless communication means, for example, short range wireless communication means (such as Bluetooth®, NFC (Near Field Communication), UWB (Ultra Wide Band), WLAN (Wireless Local Area Network), wireless telecommunication means (such as any existing or future generation of cellular network standard (e.g. 5G (fifth-generation technology standard)), Ethernet or USB (Universal Serial Bus) communication protocol, or any combination thereof.

Further, the system/apparatus 1200 may comprise one or more input (e.g. a keyboard, touch screen, microphone, haptic input, etc.) and output (display, loudspeaker, haptic output, etc.) means.

FIG. 13 shows a non-transitory media 1300 according to some embodiments. The non-transitory media 1300 is a computer readable storage medium. It maybe e.g. a CD, a DVD, a USB stick, a blue ray disk, etc. The non-transitory media 1100 stores computer program code causing an apparatus to perform operations described above when executed by a processor such as processor 1202 of FIG 12.

Any mentioned apparatus, e.g. the 300 and 1200, and/or other features of particular mentioned apparatus may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/ functional units.

Any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which maybe source/transport encoded) recorded on an appropriate carrier (e.g. memory, signal).

Any "computer" described herein can comprise a collection of one or more individual processors/processing elements that may or may not be located on the same circuit board, or the same region/position of a circuit board or even the same device. In some examples one or more of any mentioned processors may be distributed over a plurality of devices. The same or different processor/processing elements may perform one or more functions described herein.

The term "signalling" may refer to one or more signals transmitted as a series of transmitted and/or received electrical/optical signals. The series of signals may comprise one, two, three, four or even more individual signal components or distinct signals to make up said signalling. Some or all of these individual signals may be transmitted/received by wireless or wired communication simultaneously, in sequence, and/or such that they temporally overlap one another.

With reference to any discussion of any mentioned computer and/or processor and memory (e.g. including ROM, CD-ROM etc.), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/examples may consist of any such individual feature or combination of features. In view of the foregoing description it will be evident to a person skilled in the art that various modifications may be made within the scope of the disclosure.

While there have been shown and described and pointed out fundamental novel features as applied to examples thereof, it will be understood that various omissions and substitutions and changes in the form and details of the devices and methods described may be made by those skilled in the art without departing from the scope of the disclosure. For example, it is expressly intended that all combinations of those elements and/or method steps which perform substantially the same function in substantially the same way to achieve the same results are within the scope of the disclosure. Moreover, it should be recognized that structures and/or elements and/or method steps shown and/or described in connection with any disclosed form or examples may be incorporated in any other disclosed or described or suggested form or example as a general matter of design choice. Furthermore, in the claims means-plus-function clauses are intended to cover the structures described herein as performing the recited function and not only structural equivalents, but also equivalent structures.

**Claims**

1. Apparatus comprising:

   one or more sensors;
   at least one processor; and
   at least one memory with storing instructions that, when executed by the at least one processor, cause the apparatus at to at least:

      collect one or more sets of sensor data using the one or more sensors;
      classify the one or more sets of sensor data using an encoded Tsetlin machine, wherein the encoded Tsetlin machine comprises a compressed representation of a trained Tsetlin machine, the compressed representation being based on a number of exclude decisions of the trained Tsetlin machine being greater than a number of include decisions of the trained Tsetlin machine.

2. The apparatus of claim 1, wherein the compressed representation comprises a sequence of N-bit blocks, each block encoding a repeating sequence of include and/or exclude decisions of the trained Tsetlin machine and comprising:

   a two-bit key, the two-bit key representing an include and/or exclude pattern of the trained Tsetlin machine; and an N-2 bit number, the number encoding a length of a repeating sequence of the two-bit key.

3. The apparatus of claim 2, wherein the N-2 bit number encodes a number of repetitions of the 2-bit key before either: (i) the repeating 2-bit pattern changes or (ii) the maximum number of repetitions that is representable by the block is reached.

4. The apparatus of any preceding claim, wherein the compressed representation comprises one or more blocks corresponding to the include decisions of a respective class of the trained Tsetlin machine, wherein a block comprises:

   a block-length index, the block-length index indicating a length of the block; and
   one or more sub-blocks, wherein a sub-blocks corresponds to a clause in the respective class represented by the block, the sub-block comprising:

      a clause length index indicating length of the sub-block; and
      if the clause length index is non-zero, one or more pairs of inclusion indices, each pair of inclusion indices comprising a feature index and a literal index identifying an include decision of the trained Tsetlin machine for the clause represented by the sub-block.

5. The apparatus of claim 4, wherein each clause in a class of the trained Tsetlin machine is represented by a sub-block in a respective block of the encoded representation.

6. The apparatus of any preceding claim, further comprising a power system for generating power from ambient energy, wherein the instructions further cause the apparatus to:

   estimate an amount of energy available for classification of the one or more sets of sensor data; and
   determine a subset of clauses for use by the encoded Tsetlin machine for classifying the sensor data based on the estimated amount of energy and a set of weight, each weight associated with a respective clause in a set of clauses.

7. Apparatus comprising:

> one or more sensors;
> a power system for generating power from ambient energy;
> at least one processor; and
> at least one memory with storing instructions that, when executed by the at least one processor, cause the apparatus at least to:
>
> > collect one or more sets of sensor data using the one or more sensors;
> > estimate an amount of energy available for classification of the one or more sets of sensor data;
> > determine a subset of clauses for use by a Tsetlin machine for classifying the sensor data based on the estimated amount of energy and an ordered list of clauses, the ordered list of clauses indicating a relative importance of each clause in the Tsetlin machine; and
> > classify the one or more sets of sensor data using the Tsetlin machine.

8. The apparatus of any of claims 6 or 7, wherein:

> the estimating of the amount of energy available for classification of the one or more sets of sensor data further comprises:
>
> > determine an off-time of the apparatus; and
> > compare the off-time to an off-threshold; and
>
> wherein the determining of the subset of clauses for use by the Tsetlin machine for classifying the sensor data further comprises:
>
> > if the off-time is greater than the off-threshold, drop one or more clauses from the Tsetlin machine based on a position of the one or more clauses on the ordered list; and
> > if the off-time is less than the off-threshold, add one or more previously-dropped clauses to the Tsetlin machine based on a position of the one or more clauses on the ordered list.

9. A computer implemented method comprising:

> training a Tsetlin machine on a set of training data, the set of training data comprising a plurality of sets of sensor data, each with a corresponding classification;
> classifying, using the trained Tsetlin machine, the training data to determine a set of test classifications;
> separating positive and negative clauses of the trained Tsetlin machine;
> generating a set of ranked positive clauses and a set of ranked negative clauses by ranking the positive clauses and negative clauses of the trained Tsetlin machine based on the set of test classifications;
> combining the set of ranked positive clauses and the set of ranked negative clauses to generate a combined ranked list of clauses, wherein the combined ranked list of clauses alternates between positive and negative clauses; and
> encoding the combined ranked list of clauses using an encoding scheme based on a number of exclude decisions of the trained Tsetlin machine being greater than a number of include decisions of the trained Tsetlin machine.

10. The method of claim 9, wherein ranking the positive clauses and negative clauses of the trained Tsetlin machine based on the set of test classifications further comprises, for each of a plurality of training examples in the training dataset, each training example comprising a set of sensor data and a ground truth classification:

> comparing the test classification of the training example to the ground truth classification of the training example;
> if the test classification of the training example matches the ground truth classification of the training example:
>
> > increasing weights associated with positive clauses with a positive output in the class associated with the test classification; and
> > decreasing weights associated with negative clauses with a positive output in the class associated with the test classification; and
>
> if the test classification of the training example does not match the ground truth classification of the training example:

decreasing weights associated with positive clauses with a positive output in the class associated with the test classification; and
increasing weights associated with negative clauses with a positive output in the class associated with the test classification;

ranking the positive clauses based on their respective weights; and
ranking the negative clauses based on their respective weights.

11. The method of any of claims 9 or 10, wherein the encoding scheme comprises a first encoding scheme or a second encoding scheme, wherein:

the first encoding scheme comprises:
encoding include and exclude states of the Tsetlin machine into a plurality of blocks, each block comprising: a two-bit key, the two-bit key representing an include and/or exclude pattern of the trained Tsetlin machine; and an N-2 bit number, the number encoding a length of a repeating sequence of the two-bit key; and
the second encoding scheme comprises:
encoding include and exclude states of the Tsetlin machine into a plurality of blocks, each block comprising: a class index, the class index indicating a length of the block;

and one or more sub-blocks, wherein a sub-blocks corresponds to a clause in the respective class represented by the block, a sub-block comprising: a clause length index indicating length of the sub-block; and if the clause length index is non-zero, one or more pairs of inclusion indices, each pair of inclusion indices comprising a feature index and a literal index identifying an include decision of the trained Tsetlin machine for the clause represented by the sub-block.

12. A computer implemented method comprising:

causing collection of one or more sets of sensor data using one or more sensors;
classifying the one or more sets of sensor data using an encoded Tsetlin machine, wherein the encoded Tsetlin machine comprises a compressed representation of a trained Tsetlin machine, the compressed representation based on a number of exclude decisions of the trained Tsetlin machine being greater than a number of include decisions of the trained Tsetlin machine.

13. A computer implemented method comprising:

causing collection of one or more sets of sensor data using the one or more sensors;
estimating an amount of energy available for classification of the one or more sets of sensor data;
determining a subset of clauses for use by a Tsetlin machine for classifying the sensor data based on the estimated amount of energy and a set of weight, each weight associated with a respective clause in a set of clauses; and
classifying the one or more sets of sensor data using the Tsetlin machine.

14. A computer program product comprising computer readable instructions that, when executed by a computer, cause the computer to perform operations comprising:

causing collection of one or more sets of sensor data using one or more sensors;
classifying the one or more sets of sensor data using an encoded Tsetlin machine, wherein the encoded Tsetlin machine comprises a compressed representation of a trained Tsetlin machine, the compressed representation based on a number of exclude decisions of the trained Tsetlin machine being greater than a number of include decisions of the trained Tsetlin machine.

15. A computer program product comprising computer readable instructions that, when executed by a computer, cause the computer to perform operations comprising:

causing collection of one or more sets of sensor data using the one or more sensors;
estimating an amount of energy available for classification of the one or more sets of sensor data;

determining a subset of clauses for use by a Tsetlin machine for classifying the sensor data based on the estimated amount of energy and a set of weight, each weight associated with a respective clause in a set of clauses; and
classifying the one or more sets of sensor data using the Tsetlin machine.

FIG. 1

FIG. 2

FIG. 3

**Offline training and encoding** _402_

**_406_**

Training data _408_

Training hyperparameters _410_

Train Tsetlin model _412_

**_414_**

Inference on Training Data _418_

Clause weights _416_

Separate positive and negative clauses _420_

Rank separated clauses _422_

Write raw TA states to file _424_

Ordered TM _426_

**_428_**

Extract Inc/Exc TA states _430_

Memory /latency? _434_

Mem.

Encoder

μTM _432A_

Lat.

Encoder

αTM _432B_

**On device inference** _404_

TM model _436_

Drop classes? _438_

Y

N

Inference _448_

Available energy _442_

Scheduler _440_

Drop clauses _444_

Inference _446_

FIG. 4

502

| 0 | 1 | 0 | 0 | 1 | ... | 1 |

504

506

Get first and second bit → Determine sequence length → Fill packet ⟩ 512

508

510

Fill packet → Append packet to encoded array ⟩ 514

FIG. 5A

516A  516B  516C  516D  516E  516F

| 000000 | 01010101 | 11111111 | 1010101010 | 00000000 | 1010101010 | ⟩ 516

| 00 | 000011 | | 01 | 000100 | | 11 | 000100 | | 10 | 000101 | | 00 | 000100 | | 10 | 000101 |

518A  518B  518C  518D  518E  518F

FIG. 5B

602

604  606  608  610  612

Classes: | Class 1 | Class 2 | Class 3

Clauses: | Clause 1 | Clause 2 | Clause 1 | Clause 2 | Clause 1 | Clause 2

Features: | F1 | F2 | F1 | F2 | F1 | F2 | F1 | F2 | F1 | F2 | F1 | F2

TA inc/exc states: | 0 | 1 | 0 | 0 | 1 | 1 | 0 | 0 | 0 | 0 | 0 | 0 | 0 | 0 | 0 | 0 | 0 | 0 | 0 | 1 | 0 | 0 | 1

TA states index: | 1 | 2 | 1 | 2 | 1 | 2 | 1 | 2 | 1 | 2 | 1 | 2 | 1 | 2 | 1 | 2 | 1 | 2 | 1 | 2 | 1 | 2

614

616 — C

T | F | L | L ... T | F | L

618  618

**FIG. 6A**

Index: (622) | 1 | 2 | 3 | 4 | 5 | 6 | 7 | 8 | 9 | 10 | 11 | 12 | 13 | 14 | 15 | 16 | 17 | 18 | 19 | 20 | 21

Encoding: (620) | 10 | 2 | 1 | 2 | 4 | 1 | 1 | 1 | 2 | 5 | 2 | 1 | 1 | 0 | 7 | 0 | 4 | 1 | 1 | 2 | 2

626A  626B  628A  628B  630A

624A  624B  624C

630B

**FIG. 6B**

FIG. 7

Collect one or more sets of sensor data using one or more sensors

8.1

Classify the one or more sets of sensor data using an encoded Tsetlin machine

8.2

FIG. 8

Collect one or more sets of sensor data using one or more sensors

9.1

Estimate an amount of energy available for classification of the one or more sets of sensor data

9.2

Determine a subset of clauses for use by a Tsetlin machine for classifying the sensor data based on the estimated amount of energy and an ordered list of clauses

9.3

Collect one or more sets of sensor data using one or more sensors

9.4

FIG. 9

Train a Tsetlin machine on a set of training data
10.1

Classify, using the trained Tsetlin machine, the training data to determine a set of test classifications
10.2

Generate a set of ranked positive clauses and a set of ranked negative clauses
10.3

Combine the set of ranked positive clauses and set of ranked negative clauses to generate a combined ranked list of clauses
10.4

Encode the ranked list of clauses using an encoding scheme
10.5

FIG. 10

FIG. 11A

FIG. 11B

**1200**

**1204**
Volatile memory

**1202**
Processor apparatus

**1206**
Non-volatile memory

O.I — 1108

FIG. 12

1300

FIG. 13

Europäisches
Patentamt

European
Patent Office

Office européen
des brevets

# EUROPEAN SEARCH REPORT

Application Number

EP 22 20 1208

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BAKAR ABU ABUBAKAR2023@U NORTHWESTERN EDU ET AL: "Logic-based intelligence for batteryless sensors", PROCEEDINGS OF THE 27TH ACM INTERNATIONAL CONFERENCE ON ARCHITECTURAL SUPPORT FOR PROGRAMMING LANGUAGES AND OPERATING SYSTEMS, ACMPUB27, NEW YORK, NY, USA, 9 March 2022 (2022-03-09), pages 22-28, XP058858181, DOI: 10.1145/3508396.3512870 ISBN: 978-1-4503-8736-1 * abstract * * Chapters 1-5; page 22 - page 27; figures 1-7; tables 1, 2 * ----- | 1-15 | INV. G06N5/046 G06N20/00 |
| A | US 2006/048034 A1 (CHO KYUNG-IK [KR]) 2 March 2006 (2006-03-02) * abstract * * paragraph [0048] - paragraph [0053]; figure 5 * ----- | 2,3,11 | |
| A | OLE-CHRISTOFFER GRANMO: "The Tsetlin Machine -- A Game Theoretic Bandit Driven Approach to Optimal Pattern Recognition with Propositional Logic", ARXIV.ORG, CORNELL UNIVERSITY LIBRARY, 201 OLIN LIBRARY CORNELL UNIVERSITY ITHACA, NY 14853, 3 December 2020 (2020-12-03), XP081827967, * abstract * * Chapters 1-3; page 1 - page 15; figures 1-5 * ----- -/-- | 4,5,11 | **TECHNICAL FIELDS SEARCHED (IPC)** G06N |

The present search report has been drawn up for all claims

| Place of search | Date of completion of the search | Examiner |
|---|---|---|
| The Hague | 22 February 2023 | Hasnas, Sergiu |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
 
& : member of the same patent family, corresponding
  document

EPO FORM 1503 03.82 (P04C01)

Europäisches
Patentamt

European
Patent Office

Office européen
des brevets

# EUROPEAN SEARCH REPORT

Application Number

**EP 22 20 1208**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RAHMAN TOUSIF ET AL: "MILEAGE: An Automated Optimal Clause Search Paradigm for Tsetlin Machines", 2022 INTERNATIONAL SYMPOSIUM ON THE TSETLIN MACHINE (ISTM), IEEE, 20 June 2022 (2022-06-20), pages 49-52, XP034214281, DOI: 10.1109/ISTM54910.2022.00017 [retrieved on 2022-10-24] * abstract * * Chapters I –IV; page 49 – page 52; figures 1-4 * ----- | 6-10,13, 15 | |

TECHNICAL FIELDS
SEARCHED     (IPC)

The present search report has been drawn up for all claims

| Place of search | Date of completion of the search | Examiner |
|---|---|---|
| The Hague | 22 February 2023 | Hasnas, Sergiu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 20 1208

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2023

| Patent document cited in search report | | Publication date | Patent family member(s) | | Publication date |
|---|---|---|---|---|---|
| US 2006048034 | A1 | 02-03-2006 | CN | 101006684 A | 25-07-2007 |
| | | | EP | 1784950 A1 | 16-05-2007 |
| | | | JP | 2008511243 A | 10-04-2008 |
| | | | KR | 20060018403 A | 02-03-2006 |
| | | | US | 2006048034 A1 | 02-03-2006 |
| | | | WO | 2006022484 A1 | 02-03-2006 |

For more details about this annex : see Official Journal of the European Patent Office, No. 12/82

EPO FORM P0459

**REFERENCES CITED IN THE DESCRIPTION**

**Non-patent literature cited in the description**

- **GRANMO, O.-C.** The tsetlin machine-a game theoretic bandit driven approach to optimal pattern recognition with propositional logic. *arXiv: 1804.01508*

- **BAKAR, A. et al.** Flexible, Developer Focused, Heuristic Adaptation Platform for Intermittently Powered Computing. *Proceedings of the ACM on Interactive, Mobile, Wearable and Ubiquitous Technologies,* 2021, vol. 5 (3), 1-42